# EUROPEAN PATENT SPECIFICATION

(11) **EP 1 674 879 B1**
(45) Date of publication and mention of the grant of the patent: **06.02.2008**
(21) Application number: 04030698.7
(22) Date of filing: 23.12.2004
(51) Int. Cl.: G01S 1/00

(54) **Interference management**
Behandelung von Störungen
Traitement d'interférences

(43) Date of publication of application: 28.06.2006
(73) Proprietor: Infineon Technologies AG, 81669 München (DE)
(72) Inventor: Landmark, Joakim, 75324 Uppsala (SE)
(74) Representative: Epping - Hermann - Fischer

(56) References cited:
- US-B1- 6 587 078
- US-B1- 6 828 935

## Description

### Field of invention

The present invention relates to a GPS system, adapted to manage interference from disturbing signals. The present invention also relates to a method for managing interference from disturbing signals in a GPS system and computer program products and a computer readable medium wherein an inventive method may be realised.

### Description of the background art

Somewhat simplified it can be said that a GPS receiver comprises an antenna, an RF front end unit, a filtering unit, amplifying circuits, a carrier recovery unit, a correlation unit, and a calculating unit for range calculations.

It is known that a GPS receiver can be heavily disturbed for several reasons if interfered by an RF signal, such as a GSM signal. The RF front end will be saturated, the GSM signal will go through the filters and corrupt the correlation and the GSM broadband phase noise will increase the noise floor in the receiver.

In units comprising both a GPS receiver and a GSM transmitter it is known to use a signal from the GSM transmitter to determine if the GSM transmitter is active. This is then used to disable the Automatic Gain Control (AGC) of the amplifying circuits in the GPS receiver during the GSM burst.
US-A-6 828 935 discloses prior art specified in the preambles of claims 1 and 9.

It is also known to provide a filtering unit in the GPS system with isolation that has been optimised for GSM signals.

### Summary of the present invention

### Objects

It is an object to be able to take appropriate measures when interference by a pulsed interferer, from GSM or other possible interferer, is detected in a GPS system.

It is also an object to detect interference by a pulsed interferer in order to be able to take appropriate measures during such interference.

It is a problem to be solved that a filtering unit that is optimised to isolate GSM signals will influence the GPS performance and increase the cost of the GPS system.

### Solution

With the purpose of solving one or more of the above identified objectives, and from the standpoint of a GPS system comprising an antenna, an RF front end unit, a filtering unit, amplifying circuits, a carrier recovery unit, a correlation unit, and a calculating unit for range calculations, the present invention teaches that a multiplying unit, positioned between the carrier recovery unit and the correlation unit, is adapted to multiply the signal from the carrier recovery unit to the correlation unit with either zeros, "0", or ones, "1", and that a control logic is adapted to control the multiplying unit into using zeros, "0", if interference is detected and into using ones, "1", if no interference is detected.

If the amplifying circuits comprises a Programmable Gain Amplifier (PGA) adapted to amplify received signal from said filtering unit, an Analogue to Digital Converter (ADC) adapted to convert said amplified analogue signal into a digital signal, and an Automatic Gain Control (AGC), adapted to control the gain of the PGA according to the output from the ADC, then, with the purpose of providing a possibility to detect interference, the present invention proposes that the control logic is adapted to measure the duty cycle of the highest magnitude bit of the ADC, and that the control logic is adapted to interpret a sudden and significant change in the duty cycle of the highest magnitude bit as a detected interference, where after a return to the duty cycle prior to the change of the highest magnitude bit is interpreted as no detected interference.

If the system is a part of, or co-acting with, an RF transmitter, and where a transmit active (TX Active) signal, indicating when said transmitter is active, is available from the transmitter to the GPS system, then, with the purpose of providing a possibility to detect interference, the present invention proposes that said control logic is adapted to interpret the TX Active signal as a detected interference and that no TX Active signal is interpreted as no detected interference.

This proposed embodiment is specifically advantageous where the GPS system and the RF transmitter are parts of a mobile device, such as a cellular phone, a personal digital assistant, or a mobile computer, such as a lap top, and if the RF transmitter is a GSM transmitter.

It should be understood that the term "system" in the present invention refers to the receiver part of a total GPS system, it is however obvious to the skilled person that the GPS system according to the invention may be a receiver part in a total GPS system.

### Advantages

The advantages of a system and method according to the present invention are primarily that disturbing interferences in a GPS system are easily managed. This can be done without expensive filtering techniques that will have a detrimental influence on the GPS performance.

### Brief description of the drawings

A system, a method, computer program products and a computer readable medium according to the present invention will now be described in detail with reference to the accompanying drawings, in which:
Figure 1 is a schematic and simplified illustration of a GPS system according to a first embodiment,
Figure 2 is a schematic and simplified illustration of a GPS system according to a second embodiment,
Figure 3 is a schematic and simplified illustration of a GPS system where the first and second embodiments are combined,
Figure 4 is a schematic and simplified illustration of a mobile device comprising both a GPS system and an RF transmitter,
Figure 5 is a graph showing the maximum degradation of SNR vs duty cycle of the interferer,
Figure 6 is a graph showing the measured degradation of SNR vs GSM TX power for different duty cycles, and
Figure 7 is a schematic and simplified illustration of an inventive computer program code and an inventive computer readable medium.

### Description of embodiments as presently preferred

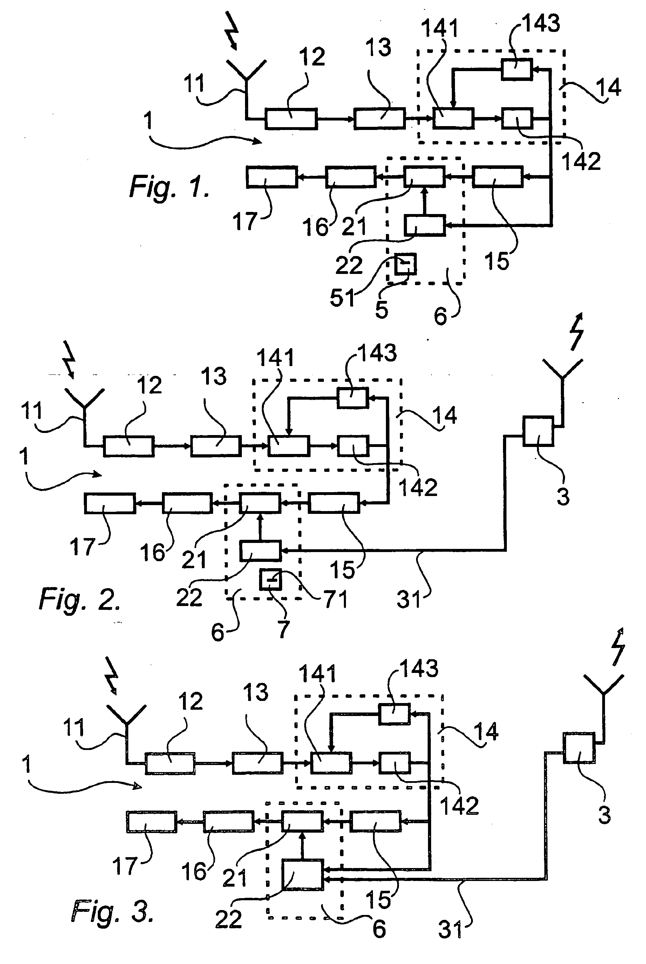

The present invention will be described with reference to Figure 1, showing a GPS system 1, adapted to manage interference from disturbing signals. The system comprises an antenna 11, an RF front end unit 12, a filtering unit 13, amplifying circuits 14, a carrier recovery unit 15, a correlation unit 16, and a calculating unit 17 for range calculations.

The present invention teaches that a multiplying unit 21, positioned between the carrier recovery unit 15 and the correlation unit 16, is adapted to multiply the signal from the carrier recovery unit 15 to the correlation unit 16 with either zeros, "0", or ones, "1". The present invention also teaches that a control logic 22 is adapted to control the multiplying unit 21 into using zeros, "0", if interference is detected and into using ones, "1", if no interference is detected.

Detection of interference may be performed in various ways and two proposed embodiments will be described below.

In a system where the amplifying circuits 14 comprises a Programmable Gain Amplifier (PGA) 141 adapted to amplify received signal from the filtering unit 13, an Analogue to Digital Converter (ADC) 142 adapted to convert the amplified analogue signal into a digital signal, and an Automatic Gain Control (AGC) 143, adapted to control the gain of the PGA 141 according to the output from the ADC 142, the present invention teaches an embodiment where the control logic 22 is adapted to measure the duty cycle of the highest magnitude bit of the ADC 142, and that the control logic 22 is adapted to interpret a sudden and significant change in the duty cycle of the highest magnitude bit as a detected interference, where after a return to the duty cycle prior to the change of the highest magnitude bit is interpreted as no detected interference. It should be understood that such a change might be either an increased duty cycle or a decreased duty cycle.

An example of this embodiment is a system where there is a 3 bit ADC 142 with one sign bit and two magnitude bits. The AGC 143 operates by measuring the duty cycle of the highest magnitude bit and controlling the gain in order to get a reasonable duty cycle. If a strong interferer, i.e. a GSM transmitter, is suddenly turned on there will be a sudden change in the duty cycle of the highest magnitude bit since the average voltage will be much higher. If the duty cycle is changed sufficiently much this can be interpreted as interference.

Since the ADC 142 is located after the filtering unit 13 it is known that interference reaching the ADC 142 will not be filtered out and thus will reach the correlation unit 16.

An advantage with this embodiment is that any source of RF signals may be detected, that is both signals from the system itself and signals from entirely other systems.

By measuring the duty cycle of the highest magnitude bit of the ADC 142 it is possible to detect interference by any pulsed interferer.

Figure 2 shows a second embodiment where the GSM system 1 is a part of, or is co-acting with, an RF transmitter 3. In such a system it is often possible to have a transmit active (TX Active) signal 31, indicating when the transmitter 3 is active, available from the transmitter 3 to the GPS system 1.

The present invention teaches that with such a system, the control logic 22 is adapted to interpret the TX Active signal 31 as a detected interference and that no TX Active signal 31 is interpreted as no detected interference.

It is obvious that a combination of the two embodiments is possible, and figure 3 shows that the control logic 22 is adapted both to interpret a TX Active signal 31 in order to detect interference and to interpret a sudden change in the duty cycle of the highest magnitude bit of the ADC 142 in order to detect interference.

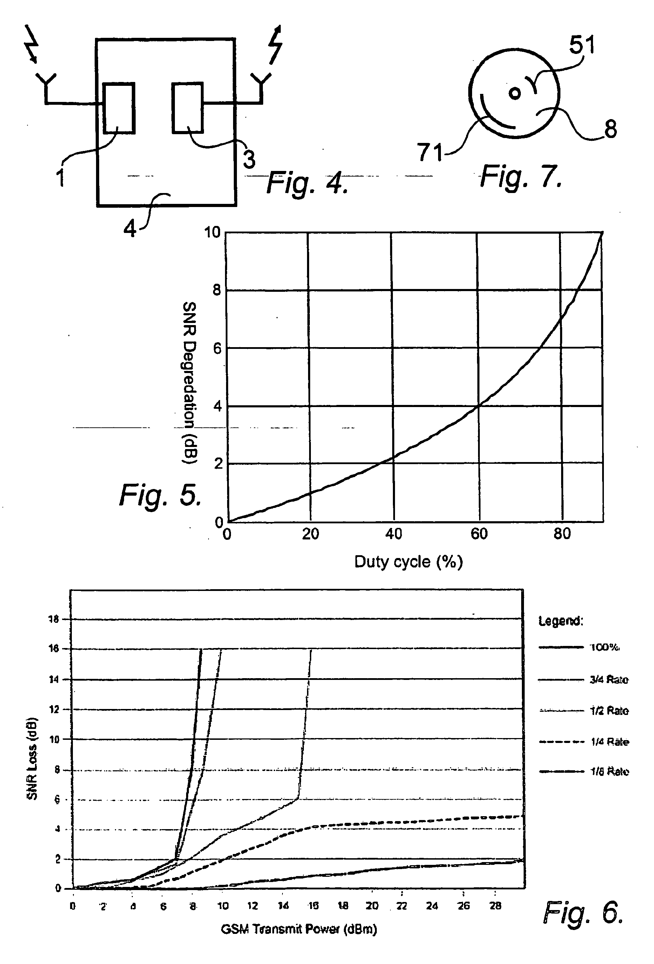

The present invention can be used in any GPS system but might be specifically advantageous when used in an embodiment shown in figure 4 where the GPS 1 system and the RF transmitter 3 are parts of a mobile device 4, such as a cellular phone or a personal digital assistant, or even a mobile computer, such as a lap top.

The present invention is specifically advantageous in applications where the RF transmitter is a GSM transmitter, which often is the situation with many mobile devices of today.

By feeding zeros to the correlation unit 16 during interference the disturbance will be minimised. There exists a threshold when the disturbances have a higher impact on the correlation than introducing zeros. Thus if it is known when the disturbances is high enough it is possible to minimise the performance degradation.

If the invention is used the maximum Signal to Noise Ratio (SNR) after the correlation is maximum degraded by the same factor as the TX Active duty cycle. This means that a 50 % duty cycle will degrade the SNR by 3 dB. However, measurements show that the degradation can be much worse than that if the TX Active is high enough.

Figure 5 presents the maximum degradation of SNR vs duty cycle of the interferer with the invention, and figure 6 shows a situation where a GSM transmitter is the source of interference, the graph showing the measured degradation of SNR vs GSM TX power for different duty cycles.

With renewed reference to figure 1 a method for managing interference from disturbing signals in a GPS system 1 according to the present invention will now be described. The GPS system 1 comprises an antenna 11, an RF front end unit 12, a filtering unit 13, amplifying circuits 14, a carrier recovery unit 15, a correlation unit 16, and a calculating unit 17 for range calculations.

The inventive method teaches that the signal from the carrier recovery unit 15 to the correlation unit 16 is multiplied with zeros, "0", if interference is detected and with ones, "1", if no interference is detected.

In a situation where the amplifying circuits 14 comprises a Programmable Gain Amplifier (PGA) 141 adapted to amplify received signal from said filtering unit 13, an Analogue to Digital Converter (ADC) 142 adapted to convert the amplified analogue signal into a digital signal, and an Automatic Gain Control (AGC) 143, adapted to control the gain of the PGA 141 according to the output from the ADC 142, the present invention teaches that a sudden and significant change in the duty cycle of the highest magnitude bit of the ADC 142 is interpreted as a detected interference, where after a return to the duty cycle prior to the change of the highest magnitude bit is interpreted as no detected interference.

Figure 2 shows a situation where the system 1 is a part of, or co-acting with, an RF transmitter 3, and where a transmit active (TX Active) signal 31, indicating when the transmitter 3 is active, is available from the transmitter 3 to the GPS system 1, the present invention teaches that the TX Active signal 31 is interpreted as a detected interference and that no TX Active signal 31 is interpreted as no detected interference.

A multiplying unit 21, positioned between the carrier recovery 15 unit and the correlation unit 16, performs the multiplications, a control logic 22 controls the multiplying unit 21 into using zeros, "0", or ones, "1", and the control logic 22 detects the interference.

The invention may be implemented as hardware, but nothing prevents the invention from being implemented as software. Hence the present invention also relates to a computer program product 5 for interference management, schematically illustrated in figure 1, comprising computer program code 51, which, when executed by a computer unit 6, will cause the computer unit 6 to manage interference in a GPS system 1 according to the inventive method.

The present invention also relates to a computer program product 7 for interference management, schematically illustrated in figure 2, that comprises computer program code 71, which, when executed by a computer unit 6, will cause the computer unit 6 to act as an inventive multiplying unit 21 and/or a control logic 22.

The present invention also relates to a computer readable medium 8 where upon inventive computer program code 51, 71 is stored according to figure 7, the computer readable medium being illustrated as a compact disc. It is however obvious that the inventive computer program code 51, 71 may be stored upon any computer readable medium.

It will be understood that the invention is not restricted to the aforedescribed and illustrated exemplifying embodiments thereof and that modifications can be made within the scope of the inventive concept as illustrated in the accompanying Claims.

### List of reference symbols

- 1: GPS system
- 3: transmitter
- 4: mobile device
- 5: computer program product
- 8: computer readable medium
- 6, 7: computer unit
- 11: Antenna
- 12: RF front end unit
- 13: filtering unit
- 14: amplifying circuits
- 15: carrier recovery unit
- 16: correlation unit
- 17: calculating unit for range calculations
- 21: multiplying unit
- 22: control logic
- 31: transmit active signal
- 51, 71: computer program code
- 141: Programmable Gain Amplifier
- 142: Analogue to Digital Converter
- 143: Automatic Gain Control

## Claims

1. A GPS system (1), adapted to manage interference from disturbing signals, comprising an antenna (11), an RF front end unit (12), a filtering unit (13), amplifying circuits (14), a carrier recovery unit (15), a correlation unit (16), and a calculating unit (17) for range calculations,
**characterised in that** a multiplying unit (21), positioned between said carrier recovery unit (15) and said correlation unit (16), is adapted to multiply the signal from said carrier recovery unit to said correlation unit with either zeros, "0", or ones, "1", and that a control logic (22) is adapted to control said multiplying unit (21) into using zeros, "0", if interference is detected and into using ones, "1", if no interference is detected.

2. A GPS system (1) according to claim 1, where said amplifying circuits (14) comprises a Programmable Gain Amplifier (PGA) adapted to amplify received signal from said filtering unit (13), an Analogue to Digital Converter (142) adapted to convert said amplified analogue signal into a digital signal, and an Automatic Gain Control (143), adapted to control the gain of said Programmable Gain Amplifier (141) according to the output from said Analogue to Digital Converter (142),
**characterised in that** said control logic (22) is adapted to measure the duty cycle of the highest magnitude bit of said Analogue to Digital Converter (142), and that said control logic is adapted to interpret a sudden and significant change in the duty cycle of said highest magnitude bit as a detected interference, where after a return to the duty cycle prior to the change of said highest magnitude bit is interpreted as no detected interference.

3. A GPS system (1) according to claim 1 or 2, where said system is a part of, or co-acting with, an RF transmitter (3), and where a transmit active signal (31), indicating when said transmitter is active, is available from said transmitter to said GPS system,
**characterised in that** said control logic (22) is adapted to interpret said transmit active signal (31) as a detected interference and that no transmit active signal (31) is interpreted as no detected interference.

4. A GPS system (1) according to claim 3,
**characterised in that** said GPS system (1) and said RF transmitter (3) are parts of a mobile device (4).

5. A GPS system (1) according to claim 4,
**characterised in that** said mobile device is a cellular phone (4) .

6. A GPS system (1) according to claim 4,
**characterised in that** said mobile device is a personal digital assistant (4).

7. A GPS system (1) according to claim 4,
**characterised in that** said mobile device is a mobile computer (4), such as a lap top.

8. A GPS system (1) according to any one of claims 3 to 7,
**characterised in that** said RF transmitter is a GSM transmitter (3).

9. A method for managing interference from disturbing signals in a GPS system (1), said GPS system comprising an antenna (11), an RF front end unit (12), a filtering unit (13), amplifying circuits (14), a carrier recovery unit (15), a correlation unit (16), and a calculating unit (17) for range calculations,
**characterised in that** the signal from said carrier recovery unit (15) to said correlation unit (16) is multiplied with zeros, "0", if interference is detected and with ones, "1", if no interference is detected.

10. A method according to claim 9, said amplifying circuits (14) comprising a Programmable Gain Amplifier (141) adapted to amplify received signal from said filtering unit (13), an Analogue to Digital Converter (142) adapted to convert said amplified analogue signal into a digital signal, and an Automatic Gain Control (143), adapted to control the gain of said Programmable Gain Amplifier (141) according to the output from said Analogue to Digital Converter (142),
**characterised in that** a sudden and significant change in the duty cycle of said highest magnitude bit of said Analogue to Digital Converter (142) is interpreted as a detected interference, where after a return to the duty cycle prior to the change of said highest magnitude bit is interpreted as no detected interference.

11. A method according to claim 9 or 10, said GPS system being a part of, or co-acting with, an RF transmitter (3), and where a transmit active signal (31), indicating when said transmitter (3) is active, is available from said transmitter to said GPS system,
**characterised in that** said transmit active signal (31) is interpreted as a detected interference and that no transmit active signal (31) is interpreted as no detected interference.

12. A method according to any one of claims 9, 10 or 11,
**characterised in that** a multiplying unit (21), positioned between said carrier recovery unit (15) and said correlation unit (16), performs said multiplications, that a control logic (22) controls said multiplying unit into using zeros, "0", or ones, "1", and that said control logic (22) detects said interference.

13. A computer program product (5) for interference management,
**characterised in that** said computer program product comprises computer program code (51), which, when executed by a computer unit (6), will cause said computer unit to manage interference in a GPS system according to any one of claims 9 to 12.

14. A computer program product (7) for interference management,
**characterised in that** said computer program product comprises computer program code (71), which, when executed by a computer unit (6), will cause said computer unit to act as a multiplying unit and/or a control logic according to claims 1 to 8 or claim 12.

15. A computer readable medium (8),
**characterised by** the storage of computer program.code (51, 71) according to claim 13 or 14.

## Patentansprüche

1. GPS-System (1) zum Behandeln von Störungen von störenden Signalen, mit einer Antenne (11), einer HF-Eingangseinheit (12), einer Filtereinheit (13), Verstärkungsschaltungen (14), einer Trägerrückgewinnungseinheit (15), einer Korrelationseinheit (16) und einer Recheneinheit (17) für Abstandsberechnungen, **dadurch gekennzeichnet, daß** eine zwischen die Trägerrückgewinnungseinheit (15) und die Korrelationseinheit (16) positionierte Multipliziereinheit (21) zum Multiplizieren des Signals von der Trägerrückgewinnungseinheit zu der Korrelationseinheit mit entweder Nullen "0" oder Einsen "1" geeignet ist und daß eine Steuerungslogik (22) zum Ansteuern der Multipliziereinheit (21) zur Verwendung von Nullen "0", wenn Störung erkannt wird und zur Verwendung von Einsen "1", wenn keine Störung erkannt wird, geeignet ist.

2. GPS-System (1) nach Anspruch 1, wobei die Verstärkungsschaltungen (14) einen Verstärker mit programmierbarer Verstärkung (PGA) zum Verstärken des Empfangssignals von der Filtereinheit (13), einen Analog-Digital-Wandler (142) zum Umwandeln des verstärkten Analogsignals in ein Digitalsignal und eine automatische Verstärkungsregelung (143) zum Regeln der Verstärkung des Verstärkers mit programmierbarer Verstärkung (141) entsprechend der Ausgabe von dem Analog/Digital-Wandler (142) umfassen, **dadurch gekennzeichnet, daß** die Steuerungslogik (22) zum Messen des Tastverhältnisses des Bits mit der höchsten Größe des Analog-Digital-Wandlers (142) geeignet ist und daß die Steuerungslogik zum Interpretieren einer abrupten und bedeutenden Änderung des Tastverhältnisses des Bits mit der höchsten Größe als erkannte Störung geeignet ist, wobei nach Rückkehr zu dem Tastverhältnis vor der Änderung des Bits mit höchster Größe als keine erkannte Störung interpretiert wird.

3. GPS-System (1) nach Anspruch 1 oder 2, wobei das System ein Teil eines HF-Senders (3) ist oder mit diesem zusammenwirkt, und wobei ein Signal Sendung aktiv (31), das anzeigt, wenn der Sender aktiv ist, von dem Sender zum GPS-System zur Verfügung steht,
**dadurch gekennzeichnet, daß** die Steuerungslogik (22) zum Interpretieren des Signals Sendung aktiv (31) als erkannte Störung geeignet ist und daß kein Signal Sendung aktiv (31) als keine erkannte Störung interpretiert wird.

4. GPS-System (1) nach Anspruch 3, **dadurch gekennzeichnet, daß** das GPS-System (1) und der HF-Sender (3) Teile einer Mobilvorrichtung (4) sind.

5. GPS-System (1) nach Anspruch 4, **dadurch gekennzeichnet, daß** die Mobilvorrichtung ein Mobiltelefon (4) ist.

6. GPS-System (1) nach Anspruch 4, **dadurch gekennzeichnet, daß** die Mobilvorrichtung eine Personal Digital Assistant -Vorrichtung (4) ist.

7. GPS-System (1) nach Anspruch 4, **dadurch gekennzeichnet, daß** die Mobilvorrichtung ein mobiler Computer (4) wie beispielsweise ein Laptop ist.

8. GPS-System (1) nach einem der Ansprüche 3 bis 7, **dadurch gekennzeichnet, daß** der HF-Sender ein GSM-Sender (3) ist.

9. Verfahren zum Behandeln von Störungen von störenden Signalen in einem GPS-System (1) mit einer Antenne (11), einer HF-Eingangseinheit (12), einer Filtereinheit (13), Verstärkungsschaltungen (14), einer Trägerrückgewinnungseinheit (15), einer Korrelationseinheit (16) und einer Recheneinheit (17) für Abstandsberechnungen, **dadurch gekennzeichnet, daß** das Signal von der Trägerrückgewinnungseinheit (15) zu der Korrelationseinheit (16) mit Nullen "0" multipliziert wird, wenn Störungen erkannt werden, und mit Einsen "1" wenn keine Störungen erkannt werden.

10. Verfahren nach Anspruch 9, wobei die Verstärkungsschaltungen (14) einen Verstärker mit programmierbarer Verstärkung (141) zum Verstärken des Empfangssignals von der Filtereinheit (13), einen Analog-Digital-Wandler (142) zum Umwandeln des verstärkten Analogsignals in ein Digitalsignal und eine automatische Verstärkungsregelung (143) zum Regeln der Verstärkung des Verstärkers mit programmierbarer Verstärkung (141) entsprechend der Ausgabe von dem Analog/Digital-Wandler (142) umfassen, **dadurch gekennzeichnet, daß** eine abrupte und bedeutende Änderung des Tastverhältnisses des Bits mit höchster Größe des Analog-Digital-Wanders (142) als eine erkannte Störung interpretiert wird, wobei nach Rückkehr zu dem Tastverhältnis vor der Änderung des Bits mit höchster Größe als keine erkannte Störung interpretiert wird.

11. Verfahren nach Anspruch 9 oder 10, wobei das GPS-System ein Teil eines HF-Senders (3) ist oder mit diesem zusammenwirkt, und wobei ein Signal Sendung aktiv (31), das anzeigt, wenn der Sender aktiv ist, von dem Sender zum GPS-System zur Verfügung steht,
**dadurch gekennzeichnet, daß** das Signal Sendung aktiv (31) als erkannte Störung interpretiert wird und daß kein Signal Sendung aktiv (31) als keine erkannte Störung interpretiert wird.

12. Verfahren nach einem der Ansprüche 9, 10 oder 11, **dadurch gekennzeichnet, daß** eine zwischen die Trägerrückgewinnungseinheit (15) und die Korrelationseinheit (16) positionierte Multipliziereinheit (21) die Multiplikationen durchführt, daß eine Steuerungslogik (22) die Multipliziereinheit zur Verwendung von Nullen "0" oder Einsen "1" ansteuert und daß die Steuerungslogik (22) die Störungen erkennt.

13. Computerprogrammprodukt (5) zur Behandlung von Störungen, **dadurch gekennzeichnet, daß** das Computerprogrammprodukt Computerprogrammcode (51) umfaßt, der bei Ausführung durch eine Computereinheit (6) bewirkt, daß die Computereinheit Störungen in einem GPS-System gemäß einem der Ansprüche 9 bis 12 behandelt.

14. Computerprogrammprodukt (7) zur Behandlung von Störungen, **dadurch gekennzeichnet, daß** das Computerprogrammprodukt Computerprogrammcode (71) umfaßt, der bei Ausführung durch eine Computereinheit (6) bewirkt, daß die Computereinheit als Multipliziereinheit und/oder als Steuerungslogik nach Anspruch 1 bis 8 oder Anspruch 12 handelt.

15. Maschinenlesbares Medium (8), **gekennzeichnet durch** die Speicherung von Computerprogrammcode (51, 71) nach Anspruch 13 oder 14.

## Revendications

1. Système GPS (1) conçu pour gérer les brouillages dus à des signaux perturbateurs, comprenant une antenne (11), une unité (12) frontale RF, une unité (13) de filtrage, des circuits (14) amplificateurs, une unité (15) de récupération de porteuse, une unité (16) de corrélation et une unité (17) de calcul pour les calculs de distance, **caractérisé en ce que** l'unité (21) de multiplication, disposée entre l'unité (15) de récupération de porteuse et l'unité (16) de corrélation, est conçue pour multiplier le signal allant de l'unité de récupération de porteuse à l'unité de corrélation soit par des zéros, "0", soit par des uns, "1", et **en ce qu'**une logique (22) de commande est conçue pour commander l'unité (21) de multiplication afin qu'elle utilise des zéros, "0" , si un brouillage est détecté et à ce qu'elle utilise des uns, "1", si aucun brouillage n'est détecté.

2. Système GPS (1) suivant la revendication 1, dans lequel les circuits (14) amplificateurs comprennent un Amplificateur à Gain Programmable (AGP) conçu pour amplifier le signal reçu de l'unité (13) de filtrage, un Convertisseur Analogique à Numérique (142) conçu pour convertir le signal analogique amplifié en un signal numérique, et une Commande Automatique de Gain (143), conçue pour commander le gain de l'Amplificateur à Gain Programmable (141) en fonction de la sortie du Convertisseur Analogique à Numérique (142),
**caractérisé en ce que** la logique (22) de commande est conçue pour mesurer le rapport cyclique du bit d'amplitude la plus élevée du Convertisseur Analogique à Numérique (142) et **en ce que** la logique de commande est conçue pour interpréter une variation brusque et significative du rapport cyclique du bit d'amplitude la plus élevée comme étant un brouillage détecté, un retour se produisant ensuite au rapport cyclique antérieur à la variation du bit d'amplitude la plus élevée étant interprété comme une absence de brouillage détecté.

3. Système GPS (1) suivant la revendication 1 ou 2, dans lequel le système fait partie de, ou coopère avec, un émetteur RF (3), et dans lequel un signal (31) d'émission active, indiquant l'instant où l'émetteur est actif, est fourni par l'émetteur au système GPS,
**caractérisé en ce que** la logique (22) de commande est conçue pour interpréter le signal (31) d'émission active comme étant un brouillage détecté et **en ce que** l'absence de signal (31) d'émission active est interprétée comme une absence de brouillage détecté.

4. Système GPS (1) suivant la revendication 3, **caractérisé en ce que** le système GPS (1) et l'émetteur RF (3) font partie d'un dispositif (4) mobile.

5. Système GPS (1) suivant la revendication 4, **caractérisé en ce que** le dispositif mobile est un téléphone (4) cellulaire.

6. Système GPS (1) suivant la revendication 4, **caractérisé en ce que** le dispositif mobile est un assistant (4) numérique personnel.

7. Système GPS (1) suivant la revendication 4, **caractérisé en ce que** le dispositif mobile est un ordinateur (4) mobile tel qu'un ordinateur portable.

8. Système GPS (1) suivant l'une quelconque des revendications 3 à 7, **caractérisé en ce que** l'émetteur RF est un émetteur GSM (3).

9. Procédé de gestion du brouillage dû à des signaux perturbateurs dans un système GPS (1), le système GPS comprenant une antenne (11), une unité (12) frontale RF, une unité (13) de filtrage, des circuits (14) amplificateurs, une unité (15) de récupération de porteuse, une unité (16) de corrélation, une unité (17) de calcul pour les calculs de distance,
**caractérisé en ce que** le signal allant de l'unité (15) de récupération de porteuse à l'unité (16) de corrélation est multiplié par des zéros, "0", si un brouillage est détecté et par des uns, "1", si aucun brouillage n'est détecté.

10. Procédé suivant la revendication 9, lesdits circuits (14) amplificateurs comprenant un Amplificateur à Gain Programmable (141) conçu pour amplifier le signal reçu de l'unité (13) de filtrage, un Convertisseur Analogique à Numérique (142) conçu pour convertir le signal analogique amplifié en un signal numérique, et une Commande Automatique de Gain (143) conçue pour commander le gain de l'Amplificateur à Gain Programmable (141) en fonction de la sortie du Convertisseur Analogique à Numérique (142),
**caractérisé en ce qu'**une variation brusque et significative du rapport cyclique du bit d'amplitude la plus élevée du Convertisseur Analogique à Numérique (142) est interprétée comme un brouillage détecté, un retour se produisant ensuite au rapport cyclique antérieur à la variation du bit d'amplitude la plus élevée étant interprété comme une absence de brouillage détecté.

11. Procédé suivant la revendication 9 ou 10, le système GPS faisant partie de, ou coopérant avec un émetteur RF (3) et dans lequel un signal (31) d'émission active, indiquant les instants où l'émetteur (3) est actif, est fourni par l'émetteur au système GPS,
**caractérisé en ce que** le signal (31) d'émission active est interprété comme un brouillage détecté et **en ce que** l'absence de signal (31) d'émission active est interprétée comme une absence de brouillage détecté.

12. Procédé suivant l'une quelconque des revendications 9, 10 ou 11, **caractérisé en ce qu'**une unité (21) de multiplication, disposée entre l'unité (15) de récupération de porteuse et l'unité. (16) de corrélation, effectue des multiplications, **en ce qu'**une logique (22) de commande commande l'unité de multiplication afin qu'elle utilise des zéros, "0", ou des uns, "1", et **en ce que** la logique (22) de commande détecte le brouillage.

13. Produit (5) à base de programme informatique pour la gestion du brouillage,
**caractérisé en ce que** le produit à base de programme informatique comprend un code (51) de programme informatique qui, lorsqu'il est exécuté par un ordinateur (6), fait en sorte que l'ordinateur gère les brouillages dans un système GPS suivant l'une quelconque des revendications 9 à 12.

14. Produit (7) à base de programme informatique pour la gestion des brouillages,
**caractérisé en ce que** le produit à base de programme informatique comprend un code (71) de programme informatique qui, lorsqu'il est exécuté par un ordinateur (6), fait en sorte que l'ordinateur joue le rôle d'unité de multiplication et/ou de logique de commande suivant les revendications 1 à 8 ou la revendication 12.

15. Support (8) lisible par ordinateur,
**caractérisé par** la mémorisation du code (51, 71) de programme informatique suivant la revendication 13 ou 14.
